# EUROPEAN PATENT APPLICATION

(11) **EP 2 728 255 A1**
(43) Date of publication of application: **07.05.2014**
(21) Application number: 12190808.1
(22) Date of filing: 31.10.2012
(51) Int. Cl.: F23M 5/08, F23R 3/00, F23R 3/04, F23R 3/06

(54) **Hot gas segment arrangement**

(71) Applicant: Alstom Technology Ltd, 5400 Baden (CH)
(72) Inventor: Benz, Urs, 5073 Gipf-Oberfrick (CH); Appel, Christoph, 5222 Umiken (CH); Konradt, Oliver, 5304 Endingen (CH); Lenuzzi, Ivan, 47000 Karlovac (HR); Markovic, Alen, 47000 Karlovac (HR)

(57) **Abstract**

A hot gas segment arrangement (20), especially for a combustion chamber of a gas turbine, comprises at least one hot gas segment (22), which is removably mounted on a carrier (21), and is subjected at its outside to hot gas and impingement-cooled at its inside, whereby an impingement plate (23) with a plurality of distributed impingement holes (25) is arranged in a distance at the inside of said impingement plate (23), whereby a cooling air supply means (24) is provided for loading said impingement plate (23) with pressurized cooling air in order to generate through said impingement holes (25) jets of cooling air, which impinge on the inside of said hot gas segment (22).

The cooling efficiency and lifetime are increased by said impingement plate (23) being part of a closed receptacle (24), which is supplied with said pressurized cooling air, and by said receptacle (24) with said impingement plate (23) being mounted on said carrier (21) independently of said hot gas segment (22).

## Description

### BACKGROUND OF THE INVENTION

The present invention relates to impingement-cooled hot gas parts, especially in a combustion chamber of a stationary gas turbine. It refers to a hot gas segment arrangement according to the preamble of claim 1.

### PRIOR ART

Combustion chambers of stationary gas turbines must be effectively cooled to achieve the requested lifetime. On the other hand, the performance of the machine as well as certain emission goals have to be considered.

To achieve a good efficiency of the gas turbine cycle, the cooling within the combustion chamber has to be efficient. The cooling is done, dependent on the requirements, by means of convective cooling, effusion cooling, film cooling, impingement cooling, or a combination of these different cooling methods. The last method, impingement cooling, is used, when an intensive cooling is required without interfering with the hot gas flow of the machine.

Hot gas parts (HGP), which are cooled with impingement cooling, comprise at present an impingement plate and a hot gas segment, both being connected directly or indirectly by means of brazing or welding. These hot gas segments are preferably mounted in circumferential direction of the split line of the machine and are fixed in circumferential direction.

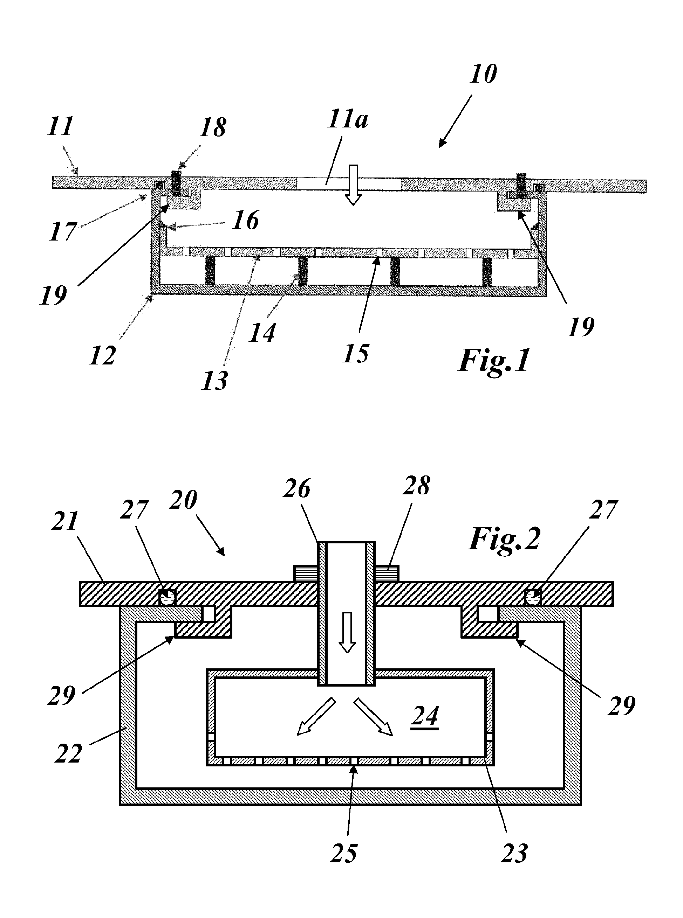

Fig. 1 shows an example of an impingement-cooled hot gas segment according to the prior art. The hot gas segment arrangement 10 according to Fig. 1 comprises a plate-like carrier 11, which is provided on its hot gas side (lower side in Fig. 1) with hooks 19 for mounting therein a hot gas segment 12. A sealing 17 in form of a rope seal seals the interior of the hot gas segment 12 against hot gas on the outside of the hot gas segment 12. Hot gas segment 12 is further fixed in circumferential direction by means of circumferential fixations 18. The interior of hot gas segment 12 is accessible for cooling air supplied from the backside of the carrier 11 through a wide opening 11 a in carrier 11.

The outer wall (bottom in Fig. 1) of hot gas segment 12 is cooled from the inside by means of impingement cooling. Therefore, an impingement plate 13 is arranged at a distance from the outer wall in the interior of hot gas segment 12. The distance is determined by a plurality of distributed spacers 14. The impingement plate 13 in this case is essentially flat with its border being bent up to be brazed or welded to hot gas segment 12 as a fixation 16.

This technology has disadvantages, as the impingement plate 13 and the hot gas segment 12 are connected by brazing or welding:
● The connection of both parts requires additional technical, time and cost effort during manufacturing;
● The connection of both parts generates thermal stress due to the different thermal expansion of impingement plate and hot gas segment during operation of the machine; the consequence is:
   o A reduced lifetime; and
   o the necessity of relief slots, which reduce the cooling efficency.
● The connection of both parts requires additional technical, time and cost effort during reconditioning, i.e. separation of impingement plate and hot gas segment at the beginning, and brazing or welding at the end of reconditioning;
● Compared to other cooling schemes a very high leakage occurs through the hot gas part into the combustion chamber, as a high pressure drop is necessary for impingement cooling. Inversely, this means that at a given pressure drop along the hot gas part the cooling efficiency is reduced;
● As the hot gas segment is mounted in circumferential direction of the parting plane,
   o the mounting cross section of the hot gas part may not be affected by the carrier; and
   o the removal of the hot gas parts at disassembly may require an additional time effort, when the hot gas parts are contorted thermally.

There is existing a number of prior art publications concerning the design of impingement-cooled hot gas parts:
Document EP 1 178 182 A1 discloses a gas turbine segmental ring, which has an increased rigidity to suppress a thermal deformation and enables less cooling air leakage by a less number of connecting portions of segment structures. Cooling air from a compressor flows through cooling holes of an impingement plate to enter a cavity and to impinge on a segmental ring for cooling thereof. The cooling air further flows into cooling passages from openings of the cavity for cooling an interior of the segmental ring and is discharged into a gas path from openings of a rear end of the segmental ring. Waffle pattern of ribs arranged in a lattice shape is formed on an upper surface of the segmental ring to thereby increase the rigidity.
A plurality of slits are formed in flanges extending in the turbine circumferential direction to thereby absorb the deformation and thermal deformation of the segmental ring is suppressed. It is disadvantageous to have the impingement plate and the segment mounted on the same heat insulating ring.

Document US 7,665,962 B1 discloses a blade outer air seal in a gas turbine engine, including a plurality of ring segments secured to a blade ring carrier. An impingement ring forms a pressure vessel within the blade ring carrier and includes a first group of impingement holes positioned over the middle of the blade tip. The ring segments each include a plurality of stiffener ribs forming a plurality of leading edge pockets, trailing edge pocket and middle pockets each with pin fins to enhance the heat transfer effect. A metering plate is secured over the stiffener ribs to form closed pockets over the edge pockets while leaving the middle pockets open. A second group of impingement holes are formed in the metering plate over the edge pockets. Pressurized cooling air supplied to the pressure vessel first passes through the first group of impingement holes and is discharged directly over the middle pockets. The cooling air then flows through the second group of impingement holes and into the closed edge pockets, and then leaves through discharge holes, arranged along the leading and trailing edges of the ring segment. The individual pockets can have the impingement holes of varying sizes in order to regulate the amount of cooling air that flows into the specific pocket.

It is disadvantageous to mount the impingement plate in the direct neighborhood of the segment.

### SUMMARY OF THE INVENTION

It is an object of the present invention to improve the cooling efficiency, lifetime and assembly and disassembly of an impingement-cooled hot gas segment arrangement.

This and other objects are obtained by a hot gas segment arrangement according to claim 1.

The hot gas segment arrangement according to the invention, which is especially provided for a combustion chamber of a gas turbine, comprises at least one hot gas segment, which is removably mounted on a carrier, is subjected at its outside to hot gas, and is impingement-cooled at its inside, whereby an impingement plate with a plurality of distributed impingement holes is arranged in a distance at the inside of said impingement plate, and a cooling air supply means is provided for loading said impingement plate with pressurized cooling air in order to generate through said impingement holes jets of cooling air, which impinge on the inside of said hot gas segment. It is characterized in that said impingement plate is part of a closed receptacle, which is supplied with said pressurized cooling air, and that said receptacle with said impingement plate is mounted on said carrier independently of said hot gas segment.

According to an embodiment of the invention said receptacle is composed of said impingement plate and a back plate.

According to another embodiment of the invention said receptacle is mounted on said carrier by means of a hollow stub, and that said pressurized cooling air is introduced into said receptacle through said stub.

Specifically, said receptacle is removably mounted on said carrier.

Specifically, said stub is disposed centrally with respect to said hot gas segment.

According to a further embodiment of the invention said hot gas segment encloses said receptacle, that sealing means are provided between said hot gas segment and said carrier in a respective groove, and that said impingement plate or receptacle, respectively, is used to define a sidewall for said sealing means at a low pressure side thereof.

Specifically, said sealing means comprises a rope seal.

According to another embodiment of the invention a plurality of separate hot gas segments are arranged side by side on a carrier, whereby said hot gas segments adjoin each other with parallel sidewalls, that a plurality of grooves are provided on the outside of adjoining sidewalls, whereby the grooves of both sidewalls start within the sidewall area and open into the hot region outside said hot gas segments, and whereby the grooves of both sidewalls pair-wise match with each other, and that each pair of grooves is connected to the interior of one of the adjoining hot gas segments by means of a cooling hole.

Specifically, the cooling holes are arranged at the start of the grooves.

According to just another embodiment of the invention the cooling holes are arranged alternating on the one and the other of the adjoining hot gas segments.

### BRIEF DESCRIPTION OF THE DRAWINGS

The present invention is now to be explained more closely by means of different embodiments and with reference to the attached drawings.
- Fig. 1: shows a cross section through a hot gas segment arrangement according to the state of the art;
- Fig. 2: shows a cross section through a hot gas segment arrangement according to an embodiment of the invention;
- Fig. 3: shows an embodiment of the inventive cooling design applied to a combustion chamber transition region as disclosed in document EP 2 428 647 A1;
- Fig. 4: shows a sidewall design of a hot gas segment arrangement with adjoining hot gas segments according to another embodiment of the invention; and
- Fig. 5: shows two adjoining hot gas segments with a sidewall design according to Fig. 4.

### DETAILED DESCRIPTION OF DIFFERENT EMBODIMENTS OF THE INVENTION

Fig. 2 shows (for a comparison with Fig. 1) a cross section through a hot gas segment arrangement according to a first embodiment of the invention. The hot gas segment arrangement 20 of this embodiment comprises a carrier 21, which carries a hot gas segment 22 by means of respective hooks 29. The hot gas segment 22 is sealed against the carrier 21 by means of sealings 27 in form of rope seals. The hot gas segment 22 encloses an impingement plate 23 with a plurality of impingement holes 25. The impingement plate 23 is part of a closed receptacle 24, which receives pressurized cooling air through a hollow stub 26. The hollow stub is not only used for cooling air supply but also for fixing the receptacle 24 at the carrier 21. Preferably, the fixation comprises a removable fastener 28 so that the receptacle 24 can be demounted for maintenance or reconditioning purposes. The fixation 26, 28 is centered with respect to the hot gas segment 22.

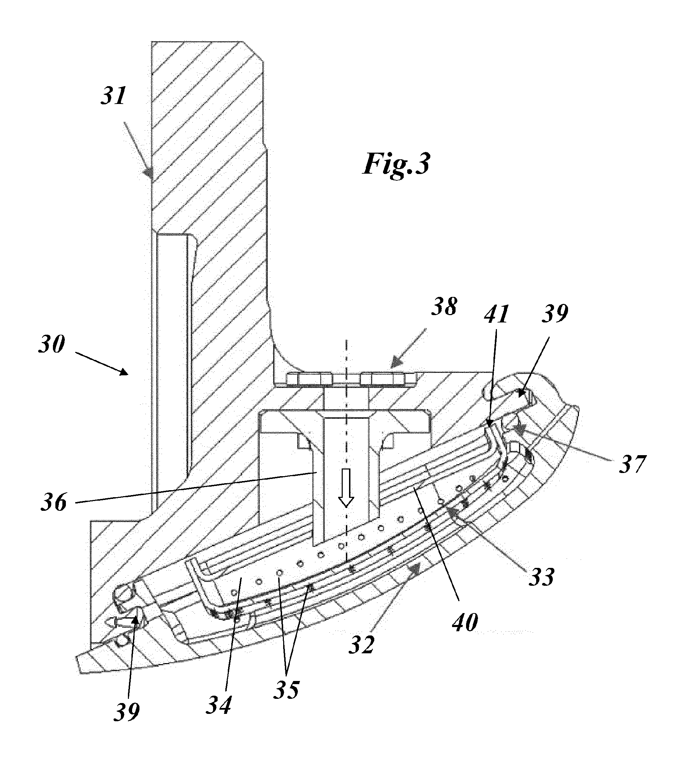

Fig. 3 shows a second embodiment of the inventive cooling design applied to a combustion chamber transition region as disclosed in document EP 2 428 647 A1. The hot gas segment arrangement 30 of Fig. 3 comprises a (curved) hot gas segment 32, which is carried by a carrier 31 by means of hooks 39. The hot gas segment 32 encloses a closed receptacle 34, which is composed of an impingement plate 33 with respective impingement holes 35 and a back plate 40, both plates being connected at a common rim. Again, a hollow stub 36 with a fastener 38 is used for fixation and supplying pressurized cooling air to the receptacle 34. The fixation 36, 38 is centered with respect to the hot gas segment 32. The hot gas segment 32 is sealed against the carrier 31 by means of a sealing (rope seal) 37. The rim of the receptacle 34 or impingement plate 33, respectively, is used as a sidewall 41 for a groove that receives the sealing 37.

Thus, according to the invention (see Fig. 2 and 3) the impingement plate 23, 33 is part of a closed receptacle 24, 34, which is directly mounted on the carrier 21, 31. Due to the nearly identical metal temperatures of impingement plate 23, 33 and carrier 21, 31, an additional sealing is not necessary with regard to the mounting of the impingement plate 23, 33 on the carrier 21, 31. However, the sealing at the mounting may be optimized by means of a sealing edge (i.e. through Hertzian stress).

Due to the closed impingement plate receptacle 24, 34 only the pressure downstream of the impingement plate 23, 33 is determining the leakage over the whole hot gas segment (HGS) 22, 32. The on this way reduced leakage mass flows improve the cooling efficiency of the machine (gas turbine).

The individual and separate mounting of the impingement plate 23, 33 on the carrier 21, 31 results in a decoupling of impingement plate 23, 33 and hot gas segment (HGS) 22, 32. Thus, impingement plate 23, 33 and hot gas segment 22, 32 are able to thermally expand independent from each other. This prolongs the lifetime of impingement plate 23, 33 and hot gas segment 22, 32 and supersedes the provision of relief slots at the impingement plate 23, 33.

Moreover, the impingement plate 33 (Fig. 3) may act as a sidewall 41 for sealing means 37 between carrier 31 and hot gas segment 32. As the impingement plate 33 defines the sidewall 41 at the low-pressure side, the rope seal 37 is prevented from slipping out of the groove.

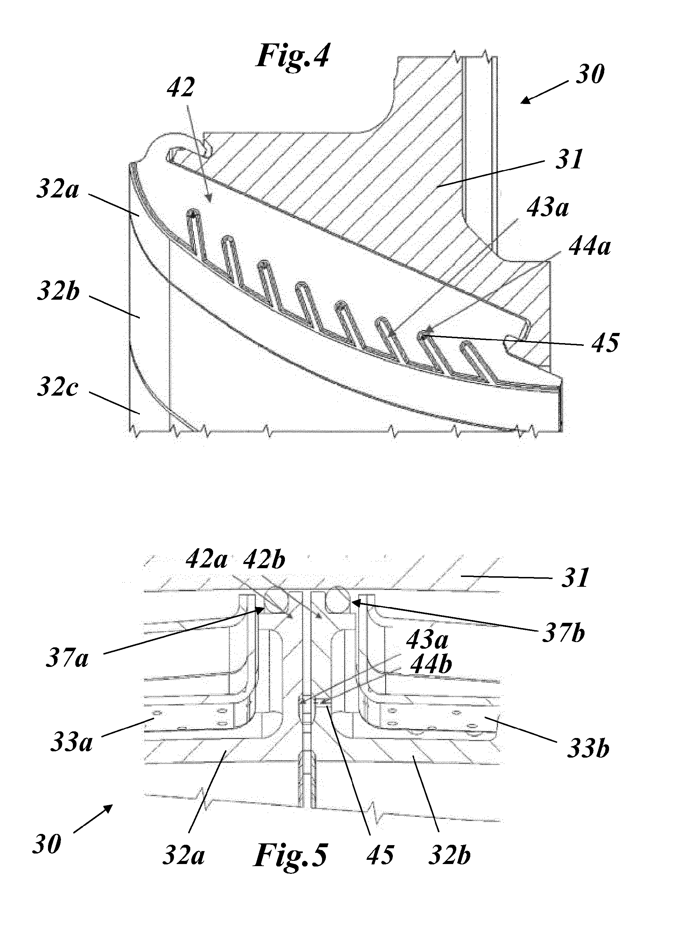

When the core of the hot gas flow through the machine shall not be affected by impingement cooling air, the impingement cooling air may leak from between the slots of adjoining hot gas segments 32a-c (Fig. 4) or 32a, 32 b (Fig. 5) by means of effusion or film cooling. To guarantee a defined cooling mass flow even in the case of closed slots, a mutually staggered design with additional grooves 43, 43a, 44a, 44b may be used (see Fig. 4 and 5).

As can be seen in Fig. 4 and 5, a plurality of separate hot gas segments 32a-c with internal impingement plates 33a, 33b and sealings 37a, 37b are arranged side by side on a carrier 31, whereby said hot gas segments 32a-c adjoin each other with parallel sidewalls 42 or 42a,b, respectively. A plurality of grooves 43a, 44a, 44b are provided on the outside of adjoining sidewalls 42, 42a,b. The (linear and slanted) grooves 43a, 44a, 44b of both sidewalls 42, 42a,b start within the sidewall area and open into the hot region outside said hot gas segments 32a-c. The grooves 43a, 44a, 44b of both sidewalls 42a,b match pair-wise with each other (see Fig. 5), and each pair of grooves 43a, 44b is connected to the interior of one the adjoining hot gas segments 32a-c by means of a cooling hole 45. In Fig. 4, every second groove 44a is provided with a cooling hole 45, while the remaining grooves 43a are without connection to the respective hot gas segment interior. In the sidewall of the adjoining hot gas segment the distribution of the cooling holes 45 is inverse, i.e. the cooling holes 45 are arranged alternating on the one and the other of the adjoining hot gas segments 32a-c for a series of groove pairs 43a, 43b (not shown) and 44a, 44b.

Preferably, the cooling holes 45 are arranged at the start of the grooves 44a,b.

As has been said already, the inventive cooling design (embodiment of Fig. 3-5) may especially be applied in the transition region of a combustion chamber of a gas turbine according to document EP 2 428 647 A1.

The advantages of the present invention are:
● A total decoupling of impingement plate and hot gas segment (HGS). This enables
   o a simplified inspection of impingement plate and hot gas segment;
   o a simple reconditioning of the hot gas part (HGP) (it is not necessary to remove the impingement plate); this reduces the technical effort and the reconditioning is less costly;
   o a longer lifetime of the impingement plate, as there is no direct contact with the hot gas segment; thus, the impingement plate can be re-used without reconditioning;
   o the leakage along the hot gas part to be substantially lower, as only a part (e.g. 1/3) of the whole (combustion chamber) pressure drop incurs at the respective sealing;
   o the omission of relief slots, as the thermal behaviour of the impingement plate is independent of the thermal behaviour of the hot gas segment; in addition, the necessary cooling air mass flow can be kept low due to the omitted relief slots;
   o the time for mounting and demounting can be reduced, as the impingement plate does not have to be mounted to or demounted from the carrier.
● A mounting/demounting in axial direction is possible (within a range of 5mm to 8mm).
● The re-design of the impingement plate allows a homogeneous or optimized cooling in all directions, as the cooling efficiency can be radially (through the sidewalls), axially and in circumferential direction adjusted in a cost-effective way by drilling respective impingement cooling holes.
   o In addition, the impingement air may be used - if desirable - in a further cooling stage (effusion cooling, film cooling, impingement cooling, preventing hot gas inflow). As an example, two impingement cooling stages may be used in series, provided the necessary pressure is available. In this way, the expensive cooling air can be used more efficiently.
● The re-design of the impingement plate allows the impingement plate to be used to define a sidewall for a rope seal at the low pressure side (see Fig. 3 and 5).
● The impingement plate can be mounted with a central fixation with respect to the hot gas segment. This allows minimized relative movements between carrier and impingement plate fixation during transient operating conditions of the machine like start-up or loading of the gas turbine.

### LIST OF REFERENCE NUMERALS

- 10,20,30: hot gas segment arrangement (HGP)
- 11,21,31: carrier
- 11 a: opening
- 12,22,32: hot gas segment (HGS)
- 13,23,33: impingement plate
- 14: spacer
- 15,25,35: impingement hole
- 16: fixation (brazed or welded)
- 17,27,37: sealing (rope seal)
- 18: circumferential fixation
- 19,29,39: hook
- 24,34: receptacle (impingement plate)
- 26,36: stub
- 28,38: fastener
- 32a-c: hot gas segment
- 33a,33b: impingement plate
- 40: back plate
- 41: sidewall (impingement plate)
- 42,42a,42b: sidewall (HGS)
- 43,43a,44a,44b: groove
- 45: cooling hole

## Claims

1. Hot gas segment arrangement (20, 30), especially for a combustion chamber of a gas turbine, comprising at least one hot gas segment (22, 32, 32a-c), which is removably mounted on a carrier (21, 31), is subjected at its outside to hot gas, and is impingement-cooled at its inside, whereby an impingement plate (23, 33, 33a,b) with a plurality of distributed impingement holes (25, 35) is arranged in a distance at the inside of said impingement plate (23, 33, 33a,b), and a cooling air supply means (24, 26; 34, 36) is provided for loading said impingement plate (23, 33, 33a,b) with pressurized cooling air in order to generate through said impingement holes (25, 35) jets of cooling air, which impinge on the inside of said hot gas segment (22, 32, 32a-c), **characterized in that** said impingement plate (23, 33, 33a,b) is part of a closed receptacle (24, 34), which is supplied with said pressurized cooling air, and that said receptacle (24, 34) with said impingement plate (23, 33, 33a,b) is mounted on said carrier (21, 31) independently of said hot gas segment (22, 32, 32a-c).

2. Hot gas segment arrangement according to claim 1, **characterized in that** said receptacle (24, 34) is composed of said impingement plate (23, 33, 33a,b) and a back plate (40).

3. Hot gas segment arrangement according to claim 1, **characterized in that** said receptacle (24, 34) is mounted on said carrier (21, 31) by means of a hollow stub (26, 36), and that said pressurized cooling air is introduced into said receptacle (24, 34) through said stub (26, 36).

4. Hot gas segment arrangement according to claim 3, **characterized in that** said receptacle (24, 34) is removably mounted on said carrier (21, 31).

5. Hot gas segment arrangement according to claim 3, **characterized in that** said stub (26, 36) is disposed centrally with respect to said hot gas segment (22, 32, 32a-c).

6. Hot gas segment arrangement according to claim 1, **characterized in that** said hot gas segment (32, 32a-c) encloses said receptacle (34), that sealing means (37) are provided between said hot gas segment (32, 32a-c) and said carrier (31) in a respective groove, and that said impingement plate (33, 33a,b) or receptacle (34), respectively, is used to define a sidewall for said sealing means (37) at a low pressure side thereof.

7. Hot gas segment arrangement according to claim 6, **characterized in that** said sealing means comprises a rope seal (27, 37).

8. Hot gas segment arrangement according to claim 1, **characterized in that** a plurality of separate hot gas segments (32a-c) are arranged side by side on a carrier (31), whereby said hot gas segments (32a-c) adjoin each other with parallel sidewalls (42a,b), that a plurality of grooves (43a, 44a, 44b) is provided on the outside of adjoining sidewalls (42a,b), whereby the grooves (43a, 44a, 44b) of both sidewalls (42a,b) start within the sidewall area and open into the hot region outside said hot gas segments, and whereby the grooves (43a, 44a, 44b) of both sidewalls (42a,b) pair-wise match with each other, and that each pair of grooves (43a, 44a, 44b) is connected to the interior of one the adjoining hot gas segments (32a-c) by means of a cooling hole (45).

9. Hot gas segment arrangement according to claim 8, **characterized in that** the cooling holes (45) are arranged at the start of the grooves (44a,b).

10. Hot gas segment arrangement according to claim 8 or 9, **characterized in that** the cooling holes (45) are arranged alternating on the one and the other of the adjoining hot gas segments (32a-c).
